**Europäisches Patentamt**

**European Patent Office**

**Office européen des brevets**

(19)

(11) Veröffentlichungsnummer: **0 180 540**
**B1**

(12)

# EUROPÄISCHE PATENTSCHRIFT

(45) Veröffentlichungstag der Patentschrift:
16.12.87

(21) Anmeldenummer: **85810461.5**

(22) Anmeldetag: **08.10.85**

(51) Int. Cl.⁴: **B 65 B 55/02**, B 65 B 57/06

(54) Einrichtung und Verfahren zur Erzeugung und Steuerung von aseptischen Bedingungen in einer Abfüllanlage.

(30) Priorität: **12.10.84 DE 3437543**

(43) Veröffentlichungstag der Anmeldung:
**07.05.86 Patentblatt 86/19**

(45) Bekanntmachung des Hinweises auf die Patenterteilung:
**16.12.87 Patentblatt 87/51**

(84) Benannte Vertragsstaaten:
**AT BE CH DE FR GB IT LI LU NL SE**

(56) Entgegenhaltungen:
**EP-A-0 062 929**
**FR-A-2 261 182**

(73) Patentinhaber: **Ingko GmbH Industrieanlagenbau,**
**Kreitstrasse 5, D-8919 Greifenberg (DE)**

(72) Erfinder: **Kohlbach, Fred R., Am Eichet 18, D-8913**
**Schondorf am Ammersee (DE)**

(74) Vertreter: **Eschmann, Heinz, A. Braun, Braun,**
**Héritier, Eschmann AG Patentanwälte**
**Holbeinstrasse 36- 38, CH- 4051 Basel (CH)**

EP 0 180 540 B1

## Beschreibung

Die Erfindung bezieht sich auf eine Einrichtung zur Erzeugung und Steuerung von aseptischen Bedingungen in einer Aseptikkammer einer Abfüllanlage bzw. in einem Abfüll-Aseptikraum für ein keimfreies Abfüllen von keimfrei gemachten Produkten aus einer Füllvorrichtung in meist zuvor gereinigte und sterilisierte Behältnisse, die noch unter diesen aseptischen Bedingungen dicht verschlossen werden, sowie auf ein Verfahren zur Erzeugung und Steuerung der genannten aseptischen Bedingungen (siehe z. B. EP-A-62 929).

Unter einem aseptischen Verpacken wird verstanden ein völlig keimfreies Produkt in völlig keimfreie Behältnisse unter absolut keimfreien Bedingungen abzufüllen. Dazu werden üblicherweise die Behältnisse in einer Wasch- und Sterilisationseinrichtung keimfrei gemacht und der Füllvorrichtung unter aseptischen Bedingungen zugeführt. Die abzufüllenden Produkte werden in einer gesonderten, an der Füllvorrichtung vorgesehenen Sterilisationseinrichtung keimfrei gemacht und in die keimfreien Behältnisse eingefüllt, welche dann dicht verschlossen werden. Danach werden die gefüllten Behältnisse aus der Abfüllanlage durch eine entsprechende Schleuse ausgetragen.

Aseptische Verpackungen kommen für Produkte der chemischen, pharmazeutischen und der Nahrungsmittelindustrie in Betracht. Die Produkte können sowohl stückig, körnig, trocken, pastös sowie auch flüssig sein. Ersichtlicherweise unterscheiden sich die Aseptik- oder Sterilkammern zum Teil erheblich, je nach der Bauart und Funktionsweise der zum Einsatz kommenden Abfüll- und Verschließanlagen. Solche Kammern können die unterschiedlichsten Abmessungen besitzen und verschiedenartige Einbauten aufweisen. Auch kann eine solche Kammer die Ausmaße eines Sterilraumes einnehmen. Zur Anwendung kommen derartige Aseptikkammern heutzutage in der Becher-, Flaschen-, Dosen-, Weichpackungs- und der Bagin-Box-Abfüllung, etc. Die letztgenannte Abfüllungsart ist in der DE-OS-29 18 707 beschrieben.

Um die Aseptikbedingungen in derartigen Kammern herzustellen, findet vor Beginn eines abfüllvorganges üblicherweise eine Vorsterilisation statt, und zwar unter Einsatz von Dampf, Heißwasser, chemischen Mitteln usw. Ist mit einer derartigen Vorsterilisation ein gewünschter Aseptikzustand in der Kammer erreicht, muß dieser, zumindest für die Dauer des Abfüllvorgangs, erhalten werden. Dazu kann dem Abfüllbereich Sterilluft unter Überdruck, beispielsweise in Form von Laminarströmung zugeführt werden; ferner können Sterilmittel-Sprühsysteme zur Vernebelung der Aseptikkammer angewandt werden oder auch Heißluftzufuhr zur Aktivierung von Sterilisationsmitteln oder zur Austreibung von Sterilisationsmittelrückständen, wie dies beispielsweise bei der Verwendung von Peroxid/Chlorlösung der Fall sein kann.

Die zum Einsatz kommenden Mittel zur Aufrechterhaltung eines Aseptikzustandes in der Sterilkammer erfüllen im Prinzip den gewünschten Zweck, jedoch besteht nach wie vor eine erhebliche Unsicherheit bei Sterilabfüllungen bezüglicher Vielfalt von Reinfektionsmöglichkeiten. Die Reinfektionsgefahr ist vor allem bei empfindlichen Produkten wie Milch (nichtsaure Produkte) besonders hoch. Reinfektionen können die verschiedensten Ursachen haben, nachstehend seien einige genannt:

bei unzureichender Vorsterilisation, beispielsweise zu kurzer Sterilisationsdauer, zu geringer Temperatur, unzureichender Überwachung des Sterilisationsvorganges;

bei zu geringem Überdruck oder gar Unterdruck in der Produktzuleitung (Sollte beispielsweise bei einer Füllunterbrechung in der Zuleitung des Aseptikproduktes der Zuleitungsinnendruck auf den Außendruck oder gar darunter absinken, was durch eine Abkühlung des Produkts oder eine Druckentweichung entstehen könnte, so besteht die Möglichkeit des Eindringens von Keimen durch feinste Ritzen, Spalten und Undichtheiten. Daher ist es von großer Wichtigkeit, daß der Überdruck in der aseptischen Zuleitung unbedingt aufrechterhalten wird.);

bei überlasteten oder defekten Sterilluftfiltern;

beim Anfahren des Abfüllvorgangs ohne eine ausreichende Kammer- und Abfüllventilvorsterilisation, z. B. bei einer zu kurzen Vorlaufzeit vor Beginn der Abfüllung;

bei zu schwacher oder zu starker Konzentration des Sterilisationsmittels oder bei Verwendung von zu altem Sterisationsmittel (das somit eine verminderte Sterilisationsaktivität entwickelt, was insbesondere dann der Fall ist, wenn das Sterilisationsmittel in einem Behälter vorangesetzt wird und durch Unachtsamkeit zu lange steht oder gar am Vortag angerührt wurde);

bei einem Ausfall der Aseptikschleusen und bei einem Undichtwerden von aseptisch abgedichteten Leitungsanschlüssen;

bei einem Ausfall von Sprühdüsen, beispielsweise infolge Verstopfens;

bei einem Ausfall der gesamten Sterilluftzufuhr;

bei einem plötzlichen Öffnen des Aseptikraumes, wodurch nichtsterilisierte Luft einströmen kann, einem unzureichenden Überdruck in der Sterilkammer, usw. sowie bei ungünstigen Strömungsverhältnissen in der Sterilkammer.

Angesichts dieser vielfältigen Reinfektionsmöglichkeiten ist es einsehbar, daß das Bedienungspersonal einer solchen Abfüllanlage praktisch unmöglich sämtliche Funktionen optisch überwachen kann, wenn dabei auch noch ausreichend hohe Fülleistungen erreicht sowie die mechanischen Funktionen des Abfüllens beherrscht werden sollen.

Es ist daher die Aufgabe der Erfindung, eine Einrichtung und ein Verfahren zu schaffen, das in der Lage ist, eine Überwachung und Steuerung sämtlicher Bedingungen und Parameter zu gewährleisten, die beim aseptischen Abfüllen auftreten können, und zwar sowohl vor der Aufnahme als auch während der Dauer des Abfüllvorgangs; ferner soll diese Einrichtung und das Verfahren an unterschiedliche Abfüllanlagen problemlos adaptierbar und dabei wirtschaftlich und zuverlässig im Betrieb sein; schließlich soll diese Einrichtung und das Verfahren zusätzlich zur Überwachung und Steuerung der während des aseptischen Abfüllens zu gewährleistenden Bedingungen eine Messung und Aufzeichnung zumindest der wesentlichen Prozeßparameter vornehmen können.

Die erfindungsgemäße Lösung dieser Aufgabe ist bezüglich der Einrichtung im Patentanspruch 1 und hinsichtlich des Verfahrens im Patentanspruch 6 definiert. Die weiteren Ansprüche kennzeichnen erfinderische Einzelheiten sowie vorteilhafte Ausführungsformen der Erfindung.

Bei der erfindungsgemäßen Einrichtung sind in den gekennzeichneten verschiedenen Systemen zur Inertgaszuleitung, zur Steril-Druckluftzuleitung und zur Sterilisationsmittelzuleitung mehrere Filter, Druckregler, Steuerventile, Durchflußmesser mit Min./Max-Grenzwertschaltern sowie Aufbereitungsanlagen für die Sterilluft und das Sterilisationsmittel vorgesehen, deren Funktionen zusammen mit entsprechenden Signalen von weiteren Meß- und Prüfstellen in der zentralen Schalt- und Steuerungseinheit verarbeitet und ausgewertet werden. Die in dieser Schalt- und Steuerungseinheit vorgesehene Sicherheits-Kontroll- und Aufzeichnungsanordnung nach der Erfindung überwacht sämtliche Parameter der Aseptikabfüllung und gewährleistet, daß die Abfüllung bei einem Ausfall auch nur eines Parameters nicht anlaufen kann. Sollte während des Abfüllens ein Parameter ausfallen, wird die Abfüllung automatisch unterbrochen. Da die erfindungsgemäße Sicherheits-Kontroll- und Aufzeichnungsanordnung eine Fehlfunktionsanzeige aufweist, wird der entsprechende Mangel angezeigt. Nach behobenem Defekt läßt sich die Anlage nach einer erneut automatisch überwachten Vorsterilisation des Aseptikraums und der Abfüllanlage wieder anfahren.

Im einzelnen handelt es sich um folgende Sicherheitsparameter, die erfüllt sein müssen, damit eine von der erfindungsgemäßen Einrichtung überwachte Abfüllanlage arbeiten kann: die Produktzuführung der Fülldruck, der Sterilkammer-Überdruck und die -temperatur, die Packungssterilisation, die Produkttemperatur, die C.I.P. (cleaning in place) und Sterilisation der Gesamtlinie, die Packungsintegrität, die Sterilisationsmittelkonzentration, die Sterilluft und Filterfunktion, die Funktion der Vernebelungsdüsen, Eingriffe des Bedienungspersonals, automatische Selbststerilisation der Komponenten der erfindungsgemäßen Einrichtung und die Einleitung aseptisch gefilterter Gase und Flüssigkeiten (z. B. eine Aromadosierung in der Sterilleitung, $CO_2/N_n$-Spargieren, Enzymdosierung usw.).

Mit der erfindungsgemäßen Einrichtung sowie dem erfindungsgemäßen Verfahren lassen sich alle Betriebsdaten aufzeichnen, um dadurch eine nachträgliche Beurteilung des Abfüllvorgangs, beispielsweise in Form eines Nachweises von Fehlern, vornehmen zu können. Eine besonders hohe Adaptierbarkeit der erfindungsgemäßen Einrichtung besteht darin, daß beispielsweise bei Mehrkanalabfüllanlagen eine individuelle Kontrolle jedes einzelnen Kanals möglich ist. Die erfindungsgemäße Einrichtung umfaßt ferner eine Sicherheitsschaltung die mit möglicherweise vorgeschalteten anlagen oder apparaten wie UHT (ultra-high-temperatur-sterilization)/HST (high-temperature-short-time pasteurization)-Anlagen, Aseptiktanks, Entlüfter usw. verbunden werden kann. Eine weitere Sicherheitsschaltung kann mit nach der Füllvorrichtung installierten Datierungs-, Codierungs-, Packungs-, Siegel-, Gewichtsprüf- und Überwachungsanlagen verbunden werden. Schließlich gestattet der in der zentralen Schalt- und Steuerungseinheit vorgesehene Einsatz von Mikroprozessorschaltungen eine weitgehende Programmierungsmöglichkeit und damit eine große Flexibilität über einen weiten Anwendungsbereich.

Die erfindungsgemäße Einrichtung zeichnet sich insbesondere durch eine größtmögliche Flexibilität und Variationsmöglichkeit aus. So können beispielsweise vorsterilisierte Behältnisse oder nicht-sterilisierte Behältnisse zur Anwendung gelangen. Aseptikflansche oder -anschlüsse mit Dampf-, Gas- oder Sterilisationsmittelsperren werden durch Druck-, Temperatur- und/oder Durchflußkontrollen überwacht. Das Inertgas läßt sich verwenden zur Überlagerung, d. h. Füllen des Kopfraumes über den abgefüllten Produkten zur Oxidationsvermeidung. Hierfür können auch mehrere Sterilisationsmittel in getrennten Dosiersystemen aufbereitet werden. So kann beispielsweise in der Sterilisationskammer ein anderes Sterilisationsmittel verwendet werden als für die Behältnissterilisation. Insoweit können insbesondere den einzelnen Gesetzesvorschriften und Verordnungen, insbesondere den entsprechenden lebensmittelgesetzlichen Regeln Rechnung getragen werden. Mit der erfindungsgemäßen Einrichtung und dem Verfahren lassen sich als Sterilisationsmittel insbesondere auch $H_2O_2$ in Verbindung mit Enzymen verwenden. Dies führt vorteilhafterweise dazu, daß die Enzyme das $H_2O_2$ in Wasser und Sauerstoff aufspalten.

Die Abfüllung erfolgt zumeist unter Druck. Es ist jedoch auch erfindungswesentlich, daß die Abfüllung mit dieser Einrichtung auch Granulate, Pulver etc. umfassen kann. In diesem Fall brauchen die entsprechenden Abfüllanlagen selbstverständlich nicht unter Druck zu arbeiten und können zum Transport der betreffenden Mittel Vibriertrichter oder ähnlich geeignete Vorrichtungen aufweisen.

Weitere Merkmale und vorteilhafte Wirkungen der Erfindung ergeben sich aus der nachfolgenden Beschreibung eines Ausführungsbeispiels der erfindungsgemäßen Einrichtung anhand von Zeichnungen. Es zeigen:

Fig. 1 ein schematisches Flußdiagramm der Bauelemente und ihrer Funktionsverknüpfungen nach den Merkmalen der Erfindung und

Fig. 2 eine schematische Darstellung einer elektrischen Schaltungsanordnung eines zentralen Teils einer Schalt- und Steuerungseinheit für das Ausführungsbeispiel der Einrichtung nach Fig. 1.

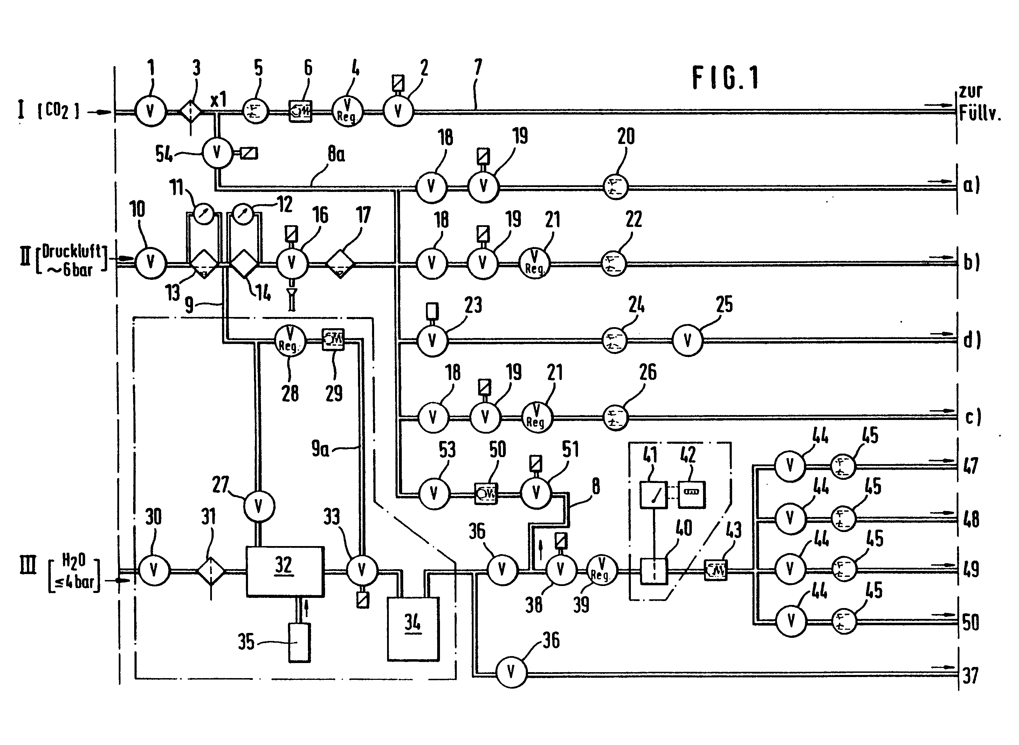

In Fig. 1 sind schematisch drei Systeme dargestellt welche jeweils Teilbereiche der gesamten Einrichtung repräsentieren und im einzelnen ein Inertgas-Zuleitungssystem I, ein Steril-Druckluftsystem II und ein Sterilisationsmittel-Zuleitungssystem III umfassen. Das Inertgas-Zuleitungssystem I wird von einem nicht gezeigten Inertgasvorrat ($CO_2$, Stickstoff od.dgl.) gespeist, aus dem das Gas, gemäß Fig. 1 von links nach rechts, durch eine Zuleitung 7 innerhalb des Systems zu einer Abfüllanlage geleitet wird. Durch dieses Inertgas-Zuleitungssystem 1 wird ein Aseptiktank oder ein Füllervorlaufbehälter am Ende der Produktleitung mit einer Inertgasdecke (unter Überdruck) überlagert, um Oxidationen und Infektion der entsprechenden Produkte zu vermeiden und, bedingt durch den Überdruck, einen gleichbleibenden Produktzulauf zu den Füllventilen sicherzustellen, ohne daß eine Pumpe zwischengeschaltet werden muß. In der Zuleitung 7 befinden sich hinter dem Inertgas-Anschluß in der Reihenfolge der Darstellung ein Auf/Zu-Ventil 1, ein Sterilfilter 3, ein Durchflußmesser 5, der einen Max./ Min.-Schalter zur Grenzwertüberwachung des kontinuierlichen Inertgasflusses aufweist, ferner ein Rückschlagventil 6, ein Druckregler 4 und ein Magnetventil 2. Zwischen dem Sterilfilter 3 und dem Durchflußmesser 5 ist an der Stelle x1 eine Spülzweigleitung 8a angeschlossen, die mit dem noch zu beschreibenden Sterilisationsmittel-Zuleitungssystem III verbunden ist. DDas Auf/Zu-Ventil 1 ist ein Handventil, und das Magnetventil 2, der Druckregler 4 sowie der Durchflußmesser 5 stehen mit einer zentralen Schalt- und Steuerungseinheit (nicht gezeigt) in Verbindung, welche die entsprechenden Schaltimpulse, z. B. zur Betätigung des Magnetventils 2 oder zur Einstellung des Druckreglers 4, liefert bzw. die entsprechenden Signale, welche von den grenzwertfestlegenden Kontakten des Durchflußmessers 5 bei Über- oder Unterschreiten des Grenzwertes abgegeben werden, empfängt und bei einer entsprechenden Abweichung den Füllvorgang abschaltet.

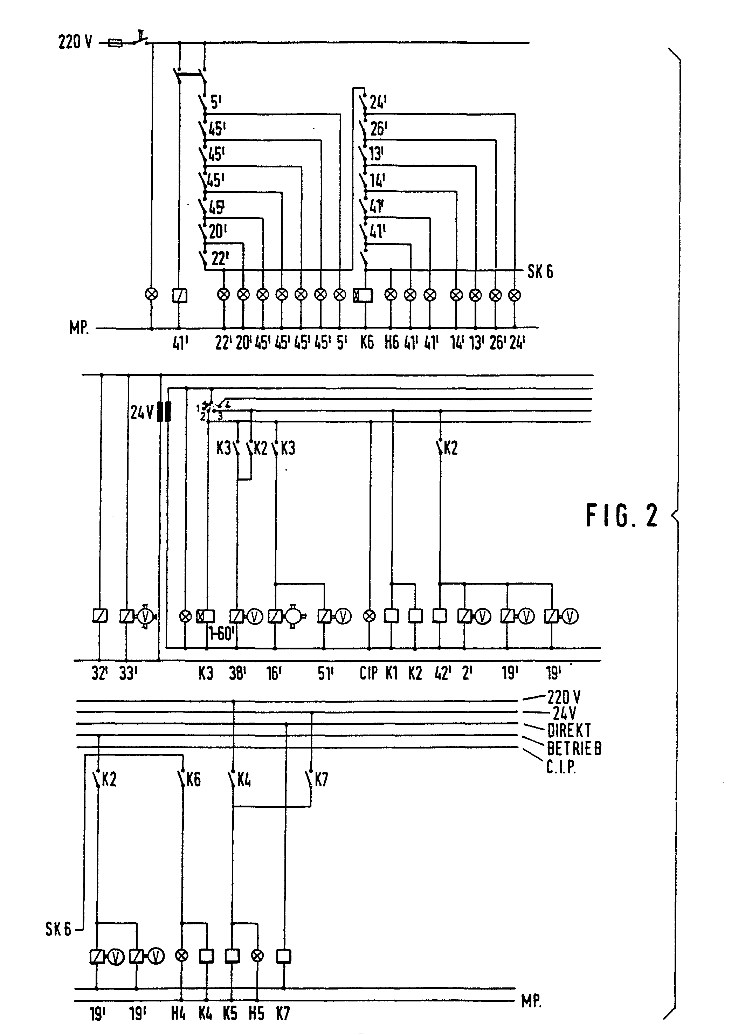

Das Steril-Druckluftsystem II wird mit trockener, sauberer Druckluft aus einem nicht dargestellten Vorrat beschickt, die durch ein Auf/Zu-Handventil 10 in eine zentrale Sterilisationsmittel-Zuleitung eingeleitet wird. In dieser Zuleitung befinden sich der Reihe nach eine aus zwei Filtern bestehende Druckluft-Vorfilteranordnung 13, 14, ein Dreiwege-Steuerventil 16 und ein Sterilfilter 17. In Durchflußrichtung hinter dem Sterilfilter befindet sich eine Verzweigungstelle, von der vier parallellaufend dargestellte Zuführungszweigleitungen abgehen, die zu verschiedenen Einsatzbereichen a-d hinführen. In den Zuführungszweigleitungen sind eine Reihe von Steuerventilen vorgesehen, wie Handventile 18 und 25, Magnetventile 19 und 23 sowie Druckregelventile 21. In jedem Zweig befindet sich ein Durchflußmesser 20, 22, 24 und 26 mit jeweils einem Min/Max-Grenzwertschalter zur Regulierung einer entsprechend voreinstellbaren Durchflußmenge; all diese Bauelemente sind in der schematisch dargestellten Weise in den einzelnen Zweigleitungen verteilt. Aus dem schematischen Schaltungsaufbau gemäß Fig. 2 sind die zu den entsprechenden Bauteilen gehörenden elektrischen Anschlüsse und Verknüpfungen ersichtlich; zur eindeutigen Zuordnung wurden in Fig. 2 die jeweils entsprechenden Bezugzeichen verwendet und diese mit einem Strich versehen.

Die über das Handventil 10 zugeführte Druckluft strömt zunächst durch die Druckluftvorfilteranordnung 13, 14, die mit einer Differentialdruckmessung ausgestattet ist. Eine Differentialdruck-Anzeigevorrichtung 11, 12, überbrückt jeweils ein Filterelement und gestattet so eine einfache Überwachung einer einwandfreien Funktion dieser Filter. Wenn beispielsweise zwischen Eingangs- und Ausgangsseite eines Vorfilters kein Differentialdruck angezeigt wird, weist dies darauf hin, daß der Filter perforiert ist. Sollte sich ein Differentialdruck einstellen, welcher einen vorbestimmten Wert übersteigt, läßt dies darauf schließen, daß der Filter verschmutzt oder verstopft ist. In beiden Fällen wird die Anlage abgeschaltet. Die vorerwähnte Verwendung sauberer, trockener Druckluft gestattet den Einsatz baulich kleiner, kompakter Filtersysteme. Dies bietet einen besonderen Vorteil gegenüber einem Einsatz von Luft unter normalem atmosphärischen Druck, da die hierfür benötigten Filter sehr groß sein müßten und auch schwierig zu überwachen wären.

Die Einrichtung ist nicht auf die Unterteilung in die dargestellten vier Zweigleitungen beschränkt. Im gezeigten Fall werden von dem Steril-Druckluftsystem II vier verschiedene Sterilluftkreise bedient, und zwar führt der Kreis a zu einem Plenum in der Überdruckkammer zur Erzeugung eines Laminar-Luftstromes, der Kreis b führt zu Sprühdüsen, d.h. zu Luft/Flüssigkeitsdruckdüsen, die zur Feinstverstäubung und Vernebelung von Sterilisationsmittel dienen, das mit der Sterilluft gemischt wird (diese Düsen werden als Niederdruckdüsen bezeichnet), der Kreis c entspricht dem nach b, jedoch werden von diesem Kreis Hochdruckdüsen gespeist und über den Kreis d wird die Maschinenbetriebsluft für die Pneumatik der Abfüllvorrichtung zur Verfügung gestellt. Eine weitere, nicht dargestellte Anwendung für eine fünfte Zweigleitung könnte in einer Zuleitung zum Aseptiktank bestehen.

Das Sterilisationsmittel-Zuleitungssystem III umfaßt in einer zentralen Sterilisationsmittelzuleitung ein Handventil 30, einen Feinstfilter 31 und eine automatische Aufbereitungs- und Dosieranlage für Sterilisationsmittel, umfassend ein Steuerventil 27, ein Druckregelventil 28, ein Rückschlagventil 29, ein Aufbereitungs- und Dosierelement 32, ein Dreiwegeventil 33 und ein weiteres Dosierelement 34. Das Aufbereitungs- und Dosierelement 32 wird aus einem Sterilisationsmittelkonzentrat-Vorratsbehälter 35 gespeist und stellt aus diesem hochkonzentrierten Sterilisationsmittel eine voreinstellbare Sterilisationslösung kontinuierlich und stets frisch her.

Die weitere Sterilisationsmittel-Zuleitung umfaßt im Anschluß an das Element 34 eine Abzweigung mit einem Handventil 36, die zu einem Anschluß 37 führt, an den eine nicht gezeigte Sprühpistole angeschlossen ist, um vernebeltes Sterilisationsmittel zu Reinigungs- und Sterilisationszwecken, zur Ventilreinigung usw. versprühen zu können. Diese Sprühpistole steht außen an der Maschine zur Verfügung. In dem Hauptzweig der Sterilisationsmittelzuleitung ist ebenfalls ein Handventil 36 vorgesehen, woran sich ein Magnetventil 38, ein Druckregelventil 39, ein Sterilisationsmittelmisch- und Konzentrationsmeß-, Kontroll- und -aufzeichnungsgerät 40, 41, 42 anschließen. Die vorgenannten Ventile erfüllen entsprechende Funktionen, wie die bereits beschriebenen Ventile gleicher Bauart. Das Sterilisationsmittelmisch- und Konzentrationsmeßgerät 40 dient zur Mischung und Überwachung der eingestellten Konzentration; letztere kann über eine pH-Wert- und Leitwertmessung erfolgen. Es könnten aber auch andere Parameter zur Überwachung herangezogen werden. Die an dieses Gerät 40 angeschlossene Konzentrationsanzeige 41 macht die jeweilige Konzentration sichtbar, und der weiter vorgesehene Konzentrationsschreiber 42 registriert kontinuierlich die Konzentration des Sterilisationsmittels, ferner die Produkttemperatur, und bei der Sterilisation der Anlage auch die erreichte Sterilisationstemperatur und -dauer.

In Strömungsrichtung hinter einem sich an das Misch- und Meßgerät 40 anschließenden Rückschlagventil 43 zweigen mehrere Zufuhrleitungen ab, die zu verschiedenen, nicht gezeigten Einsatzstellen 47 bis 50 führen. Die Einsatzstelle 47 bezeichnet beispielsweise Hochdruck-Vernebelungsdüsen, 48 repräsentiert Niederdruck-Vernebelungsdüsen, bei 49 sollen Sterilflansche und Sterildichtungen angeschlossen sein und 50 steht für eine Verpackungssterilisation (bei bestimmten Anwendungsgebieten, z. B. Softpack-Packungen werden diese durch Einsprühen einer Sterilisationslösung vorsterilisiert; zu diesem Zweck werden die genannten Packungen mit der Öffnung schräg nach unten gehalten und mit dem Sterilisationsmittel ausgesprüht). In den Zufuhrzweigleitungen befinden sich jeweils ein Steuerventil 44 sowie ein Sterilisations-Durchflußmesser 45 mit entsprechenden Min./Max.-Grenzwertschaltern zur Regulierung einer entsprechend voreinstellbaren Sterilisationsmittel-Durchflußmenge.

Zwischen den beiden Druckluftvorfiltern 13, 14 mit Differentialdruckmessung 11, 12 und dem an das Aufbereitungs- und Dosierelement 32 angeschlossenen Ventil 27 sowie dem Dreiwegeventil 33 befindet sich eine gegabelte Querverhindungsleitung 9, 9a, die für eine Druckluftzufuhr zum Sterilisationsmittel-Zuleitungssystem III dient, damit für eine entsprechende Vernebelung sterile, gereinigte Druckluft zur Verfügung steht.

Zwischen dem Handventil 36 und dem Magnetventil 38 zweigt eine Querverbindungsleitung 8 ab, welche an die Ausgangsseite des Filters 17 angeschlossen ist; von dort führt die erwähnte Spülzweigleitung 8a zur Stelle x1 an der Ausgangsseite des Filters 3 im System I. Diese Querverbindungsleitungen 8, 8a dienen zur Rückspülung der in den Systemen I und II vorhandenen Filter 13, 14, 17 und 3 und damit zu deren Reinigung und Sterilisation. Über in der Querverbindungsleitung 8 vorgesehene Steuerventile, ein Magnetventil 51, ein Rückschlagventil 50, ein Handventil 53 und ein weiteres, in der oberen Zweigleitung 8a vorgesehenes Ventil 54 wird Sterilisationsmittel aus der kontinuierlich arbeitenden Aufbereitungs- und Dosieranlage 27 bis 36 zu den austrittsseitigen Anschlüssen der Filter 17 und 3 geleitet. In der in Fig. 2 abgebildeten Schalterposition NR 2 (C.I.P.) wird das Magnetventil 51 geöffnet und die Magnetventile 2, 19 und 23 geschlossen. Gesteuert über ein nicht dargestelltes Zeitrelais werden die Filter 17, 13, 14 und 3 im Gegenstrom rückgespült und die jeweilige Rückspüllösung über schematisch dargestellte automatische Kondensatablaßventile abgeleitet. Nach Ablauf des Rückspülvorgangs und Zurückschalten in den Betriebszustand (Schalterstellung NR. 3 gemäß Fig. 2) werden die Filter durch Inertgas (im System I) bzw. durch Druckluft (im System II) über den automatischen Kondensatablaß leergedrückt. Das in den Filtern vorhandene Sterilisationsmittel zerstäubt dabei und strömt durch die Luft- und Gaszuleitungen, wodurch diese ebenfalls sterilisiert werden.

Bei hochgefährdeten Produkten läßt sich die Sterilisation der Luft- und Gasleitungen noch zusätzlich getrennt steuern und überwachen.

Aus dem elektrischen Schaltungsaufbau gemäß Fig. 2 ist ersichtlich, daß die Abfüllvorrichtung über den dargestellten Steuerstromkreis erst dann Betriebsspannung erhält, wenn alle von der Einrichtung überprüften Sicherheitsfunktionen bezüglich der aseptischen Voraussetzungen für eine Abfüllung gegeben sind. Je eine in Fig. 2 in einer nebeneinander liegenden Reihe dargestellte Kontrolleuchte in Sequenzschaltung zeigt die betriebsbereite Funktion an.

Außer den bereits beschriebenen umfaßt die Einrichtung noch weitere Meßstellen. Beispielsweise wird der Druck innerhalb der Aseptikkammer von einem nicht dargestellten Druckwächter überwacht, der bei einem Druckausfall die Abfüllvorrichtung abschaltet. Ferner sorgt ein Zeitschalter dann, wenn aufgrund einer sicherheitsbedingten oder aus sonstigen Gründen erfolgten Abschaltung der Abfüllvorrichtung eine erneute Vorsterilisierung erfolgen muß dafür, daß der Aseptikraum erst wieder für eine Dauer von 1 bis 10 min vorsterilisiert wird, bevor der Füllvorgang erneut aufgenommen werden kann.

Auch kann eine Produkt- und Fülltemperaturüberwachung mit Hilfe des Konzentrationsschreibers 42 vorgenommen werden. Für den Fall kritischer Abfülltemperaturen kann dieser Schreiber mit einer Max/Min-Temperaturüberwachung ausgestattet sein und die Produkttemperatur jeweils mitschreiben. Bei Über- oder Unterschreiten einer voreingestellten Temperatur kann dann die Anlage abgeschaltet werden. Auch läßt sich die Vorsterilisation der Produktlinie und des Füllers, die mittels Dampf oder Heißwasser erfolgt, über das Kontrollsystem überwachen. Zu diesem Zweck wird an den entsprechend kritischen Temperaturstellen ein Temperaturfühler angeordnet, welche die Temperatur an die zentrale Schalt- und Steuerungseinheit weitergibt. Ein entsprechender Sterilisationsvorgang wird kurz geschildert: Mit Einschalten der Sterilisation der Produktlinie und des Füllers wird ein Heißdampfventil oder ein Heißwasserventil geöffnet, so daß heißes Gas, Dampf oder die entsprechende Sterilisationsflüssigkeit in die Produktleitung und den Füller einströmen kann. Über ein Zeitrelais bleibt das entsprechende Dampfventil über eine voreingestellte Zeit, z. B. eine Minute lang, geöffnet. Innerhalb dieser Zeit muß der Temperaturfühler eine voreingestellte Temperatur erreicht haben oder das Dampfventil wird automatisch wieder geschlossen. Falls die Temperatur erreicht ist, hält ein nicht gezeigter Grenzwertüberwacher das Dampfventil solange geöffnet, bis ein dazwischengeschaltetes Zeitrelais (einstellbar bis zu einer Stunde) den Vorgang ausschaltet und gleichzeitig das Inertgassystem I einschaltet, um den beim Abkühlen der Leitungen entstehenden Überdruck zu vermeiden und den bereits erwähnten Überdruck in der Produktzuleitung und im Füllerbehälter aufrechtzuerhalten. Während dieses Sterilisationsvorganges kann der Aseptikraum unter Aseptikbedingungen gehalten werden, falls dies erwünscht ist. Sowohl die Vorsterilisation der Produktlinie und des Füllers als auch die der Aseptikkammer stellen eine unabdingbare Voraussetzung vor Inbetriebnahme der Abfüllanlage dar.

Mit der beschriebenen Einrichtung lassen sich praktisch beliebige Sterilisationsmittel verwenden. Besonders günstig wirkt sich die Verwendung eines Kaltsterilisationsmittels aus, da bei diesem die Nachteile der herkömmlichen Verwendung von Peroxid, welches mit Hitze aktiviert und ausgetrieben werden muß (sich durch Hitze verflüchtigt), nicht auftreten können. (In einigen Ländern (z. B. USA) werden Rückstände von Peroxid streng überwacht). Der Kontakt mit diesen Produkten, z. B. mit Peroxid $H_2O_2$ ist nicht ungefährlich und verlangt größte Vorsicht. Auch die Anwendung von Chlorlösungen, die oft verwendet werden, bedingt meist den Einsatz von heißer Luft oder von Dampf mit ebenfalls nicht unbeträchtlichen Risiken und oxidativen Folgen.

Wenn auf der beschriebenen Einrichtung ein Kaltsterilisationsmittel verwendet wird, ergibt sich dessen Wirksamkeit aus der vorteilhaften Anwendungsart. Durch die beschriebene Feinstvernebelung oder Feinstzerstäubung werden auch Kaltsterilisationsmittel hoch aktiv, was zu einem sehr hohen und schnellen Wirkungsgrad führt. Gerade diese hohe Aktivität und die Aktivierung bei Raumtemperatur ergeben beste Sterilisationseffekte. Durch die dauernde Einsprühung von feinstverteiltem Sterilisationsmittel läßt sich vorteilhafterweise auch dessen Konzentration äußerst niedrig halten, was zu einem niedrigen Grad der Toxizität führt. Es besteht praktisch überhaupt keine Beeinträchtigungsgefahr für Menschen.

Die feinstverteilten Nebelpartikel kondensieren und agglomerieren sich und werden als praktisch völlig ungiftige Flüssigkeit in den Kanal abgeleitet. Selbst bei tagelanger Arbeit, wie sie in langen Versuchsreihen erfolgte, ergaben sich keinerlei lästige Erscheinungen für die damit umgehenden Personen.

Würde allein sterile Luft im Aseptikraum verwendet, bestünde immer noch das Risiko, daß einige Keime existieren. Durch die Vermischung der Sterilluft mit feinstversprühtem Sterilisationsmittel entsteht eine Luft-Sterilmittelmischung in Nebelform, welche hochaktiv und garantiert keimfrei ist. Durch die Laminarführung der Luftströmung ist die Schaffung von völlig sterilen Kammern selbst bei ungünstigen Abmessungen und Größenordnungen möglich und kann garantiert werden.

Die über die Aufbereitungs- und Dosieranlage kontinuierliche Bereitstellung des Sterilisationsmittels hat den Vorteil, daß niemals altes Sterilisationsmittel während des Abfüllvorgangs in den Kreislauf gelangen kann. Auch steht die Konzentration des Sterilisationsmittels unter laufender Kontrolle. Durch die kontinuierliche Sterilisation ist auch das Handhaben der nicht ungefährlichen Sterilisationsmittelkonzentrate auf ein Minimum reduziert, da lediglich der Konzentrationsvorratstank 35 an das Element 32 angeschlossen werden muß und sonst keinerlei Manipulationen erforderlich sind. Wegen der hohen Konzentration des Sterilisationsmittelkonzentrats ist dies auch nur mit sehr geringer Frequenz (je nach Abfülleistung nach mehreren Tagen oder Wochen) nachzufüllen.

Die beschriebene Anlage kann auch verwendet werden für die Produktionskontrolle mit den entsprechenden Sicherheitsschaltungen (Abschaltung des Füllers). Produktkontrolle heisst pH-Wert des abzufüllenden Produktes, Leitwert, Trockensubstanz und ähnliche Daten, welche durch Sensoren ermittelt und über den Printer des Computers aufgezeichnet werden.

## Patentansprüche

1. Einrichtung zur Erzeugung und Steuerung von aseptischen Bedingungen in einer Aseptikkammer einer Abfüllanlage bzw. in einem Abfüll-Aseptikraum für ein keimfreies Abfüllen von keimfrei gemachten Produkten aus einer Füllvorrichtung in meist zuvor gereinigte und sterilisierte Behältnisse, die noch unter diesen aseptischen Bedingungen dicht verschlossen werden, gekennzeichnet durch

ein Inertgas-Zuleitungssystem (I) zur Bildung einer Überdruck-Inertgasdecke im Umgebungsbereich eines Aseptiktanks oder eines Füllervorlaufbehälters am Ende der Produktzuleitung, wobei in einer Zuleitung (7) dieses Systems zumindest ein Inertgas-Sterilfilter (3), ein Druckregler (4) sowie ein Inertgas-Durchflußmesser (5) mit einem die Füllvorrichtung betätigenden Max./Min.-Grenzwertschalter vorgesehen sind,

ein Steril-Druckluftsystem (II), welches in einer zentralen Druckluftzuführung zumindest eine Druckluft-Vorfilteranordnung (13, 14) und in Reihe dazu ein Steuerventil (16) sowie einen Druckluft-Sterilfilter (17) umfaßt, hinter dem sich die zentrale Druckluftzuführung in mehrere Zuführungs-Zweigleitungen aufteilt, die zu verschiedenen Einsatzbereichen (a-d) in der Aseptikkammer und der Füllvorrichtung hingeführt sind, wobei in jeder Zuführungszweigleitung Steuerventile (18; 19; 23; 25), gegebenenfalls ein Druckregelventil (21) sowie ein Durchflußmesser (20, 22, 24, 26) mit einem Max./Min.-Grenzwertschalter zur Regulierung einer entsprechend voreingestellten Durchflußmenge vorgesehen sind,

ein Sterilisationsmittel-Zuleitungssystem (III), umfassend eine Aufbereitungs- und Dosieranlage (27-35) für Sterilisationsmittel, eine zwischen dem Steril-Druckluftsystem (II) und dieser Anlage vorgesehene Druckluft-Querverbindungsleitung (9, 9a) sowie eine von dieser Anlage ausgehende zentrale Sterilisationsmittel-Zuleitung, in welcher Steuerventile (36, 38), ein Druckregler (39) sowie ein Sterilisationsmittelmisch- und Konzentrationsmeß-, Kontroll- und Aufzeichnungsgerät (40, 41, 42) vorgesehen sind und welche sich in mehrere Zufuhrzweigleitungen (37; 47-50) aufteilt, die jeweils mit Steuerventilen (36; 44) und gegebenenfalls mit Durchflußmessern (45) mit Max./Min.-Grenzwertschaltern zur Regulierung einer entsprechend voreingestellten Sterilisationsmittel-Durchflußmenge versehen sind und

eine für alle Systeme (I, II und III) gemeinsame zentrale Schalt- und Steuerungseinheit zur Funktionsverknüpfung der Systeme in Abhängigkeit von voreinstellbaren bzw. programmierbaren Prozeßdaten.

2. Einrichtung nach Anspruch 1, dadurch gekennzeichnet, daß die Druckluft-Vorfilteranordnung im Steril-Druckluftsystem (II) zwei in Reihe geschaltet hintereinander liegende Vorfilter (13, 14) umfaßt, die jeweils mit einer beidseits der betreffenden Filterelemente angeschlossenen Differentialdruck-Meß- und Anzeigevorrichtung (11, 12) versehen sind, daß ausgehend von der zentralen Sterilisationsmittel-Zuleitung zur Ausgangsseite des Druckluft-Sterilfilters (17) bzw. zur Verzweigungsstelle für die Zuführungszweigleitungen der Druckluftzuführung eine Spülleitung (8) sowie von dieser zu dem austrittsseitigen Ende des Inertgas-Sterilfilters (3) eine Spülzweigleitung (8a) angeschlossen ist und daß in der Spülleitung (8) und der Spülzweigleitung (8a) von der zentralen Schalt- und Steuerungseinheit aus betätigbare Steuerventile (51, 54) vorgesehen sind.

3. Einrichtung nach Anspruch 1 oder 2, dadurch gekennzeichnet, daß die Aufbereitungs- und Dosieranlage mindestens einen austauschbaren Sterilisationsmittel-Konzentrat-Vorratsbehälter (35) aufweist und eine in kontinuierlichem Betrieb stets frisch hergestellte Sterilisationsmittellösung an die zentrale Sterilisationsmittel-Zuleitung abgibt und daß das Sterilisationsmittelmisch- und Konzentrationsmeß-, Kontroll- und Anzeigegerät im einzelnen ein in die Sterilisationsmittel-Zuleitung eingeschaltetes Konzentrationsmisch- und Meßgerät (40), eine an dieses Gerät angeschlossene Konzentrationsanzeige (41) und einen wiederum mit dieser Anzeige verbundenen Konzentrationsschreiber (42) umfaßt.

4. Einrichtung nach einem der Ansprüche 1 bis 3 dadurch gekennzeichnet, daß in der Produktzuleitung zur Füllvorrichtung ein Druckfühler angeordnet ist, der bei unzureichendem Überdruck in dieser Zuleitung eine Unterbrechung der Abfüllung auslöst und daß ein Magnetventil vorgesehen ist, das bei Absinken des Überdrucks unter einen voreingestellten Wert einen entsprechend hohen Sterilgasdruck auf die Produktzuleitung gibt, um den Überdruck zu erhalten.

5. Einrichtung nach einem der Ansprüche 1 bis 4, dadurch gekennzeichnet, daß die zentrale Schalt- und Steuerungseinheit als eine programmierbare Sicherheits-Kontroll- und Aufzeichnungsanordnung ausgebildet ist, die mit den genannten Bestandteilen des Inertgas-Zuleitungssystems (I), des Steril-Druckluftsystems (II) und des Sterilisationsmittel-Zuleitungssystems (III) in Funktionsverbindung steht, daß deren Kontrollanordnung zur Überwachung eines spezifischen Vorsterilisationsprozesses an kritischen Temperaturstellen der Abfüllanlage Temperaturfühler sowie Zeitrelais aufweist, die eine Sterilisations-Heißdampf- oder Wasserventilanordnung eine vorbestimmte Zeit geöffnet halten, daß ferner ein Grenzwertüberwacher vorgesehen ist, der das genannte Ventil nach Erreichen einer gewünschten Temperatur noch eine bestimmte Zeit lang geöffnet hält, bis eines der Zeitrelais den Vorsterilisationsprozeß abschaltet, daß diese Anordnung außerdem Meß- und Kontrolleinrichtungen für die Produkttemperatur und die Fülltemperatur aufweisen, die Max./Min.-Temperaturkontakte besitzen, um vorgewählte Temperaturparameter innerhalb der jeweiligen Arbeitsbereiche zu halten und daß diese Anordnung schließlich mit einer, den Überwachungsfunktionen entsprechenden Anzahl von Kontrolleuchten mit einer Fehlfunktionsanzeige versehen ist.

6. Verfahren zur Erzeugung und Steuerung von aseptischen Bedingungen in einer Abfüllanlage mit einer Einrichtung nach einem der Ansprüche 1 bis 5, dadurch gekennzeichnet,

daß vor jedem Beginn eines Füllvorgangs oder der Wiederaufnahme nach einer Füllunterbrechung die Aseptikkammer bzw. der -raum und sämtliche für das Abfüllen erforderlichen Anlagenbestandteile für eine wählbare Zeitspanne durch eine Sterilisationsmittel-Vernebelung über das Sterilisationsmittel-Zuleitungssystem (III) vorsterilisiert werden,

daß zudem die Produktzuleitung und die Füllvorrichtung durch ein zeitlich begrenztes Hindurchleiten von heißem Gas, Dampf oder einer entsprechend wirksamen Sterilisationsflüssigkeit vorsterilisiert werden,

daß während des Abfüllbetriebs die durch die genannten Systeme (I bis III) aufrechterhaltenen aseptischen Bedingungen von der Sicherheits-Kontroll- und Aufzeichnungsanordnung nach voreingestellten Parametern periodisch überwacht, geregelt und aufgezeichnet werden und

daß bei Ausfall eines wesentlichen Parameters der Abfüllvorgang sofort unterbrochen wird.

7. Verfahren nach Anspruch 6, dadurch gekennzeichnet, daß durch die Sicherheits-Kontroll- und Aufzeichnungsanordnung vor Beginn eines Füllvorgangs die entsprechenden Parameter für eine Vorsterilisierung der Produkte, der Abfüllbehältnisse und der Aseptikkammer sowie der Zuleitungs- und Steuerventilelemente, ferner die Temperatur- und die Druckverhältnisse sowie der Sterilisationsgrad und die -dauer kontinuierlich kontrolliert werden und daß diese Anordnung den Füllvorgang solange nicht anlaufen läßt, bis alle Parameter in der voreingestellten Weise erfüllt sind.

8. Verfahren nach Anspruch 6 oder 7, dadurch gekennzeichnet, daß die Produktzuführung zur Füllvorrichtung unter dem kontinuierlich kontrollierten Druck eines Gases, wie Stickstoff, Kohlendioxid oder Sterilluft gehalten und bei Über- oder Unterschreiten eines voreingestellten Druckparameters die Füllvorrichtung abgeschaltet wird, daß ferner die Produkttemperatur, die Fülltemperatur, die Temperatur der Vorsterilisierung und die CIP-Reinigung mit Temperaturfühlern überwacht werden und daß bei einer entsprechenden Betätigung von Max./Min.-Grenzwertschaltern dieser Fühler der laufende Prozeß infolge eines Über- oder Unterschreiten eines Grenzwertes unterbrochen wird.

9. Verfahren nach einem der Ansprüche 6 bis 8, dadurch gekennzeichnet, daß die dem Steril-Druckluftsystem (II) zugeführte, über Sterilfilter gefilterte Druckluft eine trockene und reine Druckluft ist, daß die Abfüllung unterbrochen wird, wenn an den durch eine oder mehrere Differentialdruckmesser überwachten Druckluft-Vorfiltern eine Funktionsstörung auftritt, d.h. wenn ein zu hoher, zu niedriger oder kein Gegendruck besteht und daß im Anwendungsbereich der Steril-Druckluft eine kontrollierte, vorzugsweise Laminarluftströmung erzeugt und aufrechterhalten wird.

10. Verfahren nach einem der Ansprüche 6 bis 9, dadurch gekennzeichnet, daß im Sterilisationsmittel-Zuleitungssystem (III) das Sterilisationsmittel kontinuierlich auf eine gewünschte Anwendungskonzentration eingestellt und diese Konzentration über eine an das Sterilisationsmisch- und -meßgerät angeschlossene Max./Min.-Grenzwertschaltung kontrolliert wird und daß das Sterilisationsmittel mit Sterilluft aus dem Steril-Druckluftsystem (II) vermischt und im Anwendungsbereich durch Vernebelung in feinstversprühtem Zustand eingesetzt wird.

**Claims**

1. Installation for producing and controlling aseptic conditions in an aseptic chamber of a filling plant or in a filling/aseptic room for the germfree transferral of sterilized products from a filling device into containers which have been mainly cleaned and sterilized beforehand and which, in addition, are sealed under these aseptic conditions, characterized by:

an inert-gas supply system (I) for creating an excess-pressure inert-gas blanket in the vicinity of an aseptic tank or of a filler feed tank at the end of the product supply line, at least one inert-gas sterile filter (3), one pressure regulator (4) as well as an inert-gas flowmeter (5) with a maximum/minimum limit-value switch activating the filling device being provided in a supply line (7) of the system,

a sterilized compressed air system (II) which comprises in a central compressed-air supply line at least one compressed-air prefilter arrangement (13, 14) and in series therewith a control valve (16) as well as a compressed-air sterile filter (17) behind which the central compressed-air supply line is divided into several supply branch lines which lead to various areas of application (a-d) in the aseptic chamber and the filling device, there being provided in each supply branch line control valves (18; 19; 23; 25), if necessary a pressure regulator valve (21) as well as a flowmeter (20, 22, 24, 26) with a maximum/minimum limit-value switch for regulating a flow rate which has beeen correspondingly preset,

a sterilizing agent supply system (III) comprising a preparation and metering facility (27-35) for the sterilizing agent, a compressed-air cross-connecting line (9, 9a) provided between the sterilized compressed air system (II) and this facility as well as a central sterilizing agent supply line which starts from this facility and in which control valves (36, 38), a pressure regulator (39) as well as an apparatus (40, 41, 42) for mixing the sterilizing agent and measuring the concentration and for performing checking and recording are provided and which divides up into several supply branch lines (37; 47-50) which are each provided with control valves (36; 44) and, if necessary, with flowmeters (45) with maximum/minimum limitvalue switches for regulating a sterilizing agent flow rate which has been correspondingly preset, and

a central switching and control unit common to all the systems (I, II and III) and intended for linking operation of the systems in accordance with presettable or programmable process data.

2. Installation according to Claim 1, characterized in that the compressed-air prefilter arrangement in the sterilized compressed air system (II) comprises two prefilters (13, 14) which are connected in series behind each other and which are each provided with a differential-pressure measuring and indicator device (11, 12) connected on both sides of the filter elements in question, in that a rinsing line (8) is connected from the central sterilizing agent supply line to the output side of the compressed-air sterile filter (17) or to the branching point for the supply branch lines of the compressed air supply, and a rinsing branch line (8a) is connected from the said rinsing line (8) to the end of the inert-gas sterile filter (3) on the outlet side, and in that control valves (51, 54) which can be actuated from the central control and switching unit are provided in the rinsing line (8) and the rinsing branch line (8a).

3. Installation according to Claim 1 or 2, characterized in that the preparation and metering facility has at least one exchangeable tank (35) for storing the sterilizing agent concentrate and delivers a sterilizing agent solution, which is always freshly made during continuous operation, to the central sterilizing agent supply line and in that the apparatus for mixing the sterilizing agent and measuring the concentration and for performing checking and indicating comprises in particular a concentrate mixing and measuring apparatus (40) connected to the sterilizing agent supply line, a concentration indicator (41) connected to this apparatus and a concentration recorder (42) connected in turn to this indicator.

4. Installation according to one of Claims 1 to 3, characterized in that a pressure sensor is arranged in the product supply line for the filling device, which pressure sensor interrupts filling when there is inadequate excess pressure in the supply line, and in that a solenoid valve is provided, which, when the excess pressure drops below a preset value, admits a correspondingly high sterilized-gas pressure to the product supply line in order to maintain the excess pressure.

5. Installation according to one of Claims 1 to 4, characterized in that the central switching and control unit is in the form of a programmable safety checking and recording arrangement which is operationally connected to the said components of the inert-gas supply system (I), sterilized compressed air system (II) and sterilizing agent supply system (III), in that its checking arrangement for monitoring a specific pre-sterilization process at critical temperature points in the filling plant has temperature sensors as well as time relays which keep a sterilization superheated steam or water valve arrangement open for a predetermined time, in that a limit-value monitor is also provided, which keeps the said valve open for a given time after the desired temperature has been reached until one of the time relays switches off the pre-sterilization process, in that this arrangement has moreover measuring and checking devices for the product temperature and the filling temperature, which possess maximum/ minimum temperature contacts, in order to maintain preselected temperature parameters within the respective working areas, and in that this arrangement, finally, is provided with a number of control lamps corresponding to the monitoring functions and having a malfunction indicator.

6. Method for producing and controlling aseptic conditions in a filling plant using an installation according to one of Claims 1 to 5, characterized in that, before the start of a filling process or recommencement after interruption of the filling process, the aseptic chamber or room and all of the plant components necessary for filling are pre-sterilized for a selectable length of time by means of atomization of a sterilizing agent via the sterilizing agent supply system (III),

in that in addition the product supply line and the filling device are pre-sterilized by passing through them hot gas, steam or a correspondingly effective sterilizing fluid for a limited period of time,

in that, during the filling operation, the aseptic conditions maintained by means of the said systems (I to III) are periodically monitored, regulated and recorded by the safety checking and recording arrangement in accordance with preset parameters and

in that, when a basic parameter fails, the filling process is immediately interrupted.

7. Method according to Claim 6, characterized in that, by means of the safety checking and recording arrangement, before the start of a filling process, the corresponding parameters for pre-sterilization of the products, of the filling containers and of the aseptic chamber as well as of the supply line and control valve elements, and moreover the temperature and pressure conditions as well as the degree and the duration of sterilization, are continually monitored, and in that this arrangement does not allow the filling process to start until all the parameters are met in the preset manner.

8. Method according to Claim 6 or 7, characterized in that the product supply to the filling device is kept under the continually monitored pressure of a gas, such as nitrogen, carbon dioxide or sterilized air and the filling device is switched off when a preset pressure parameter is exceeded or not reached, in that in addition the product temperature, the filling temperature, the temperature of presterilization and the CIP cleaning process are monitored with temperature sensors and in that, when maximum/minimumlimit-value switches of these sensors are correspondingly actuated, the continuous process is interrupted as a result of a limit value being exceeded or not reached.

9. Method according to one of Claims 6 to 8, characterized in that the compressed air filtered via the sterile filter and supplied to the sterilized compressed air system (II) is dry and pure compressed air, in that filling is interrupted when a malfunction occurs at the compressed air prefilters monitored by one or move differential-pressure meters, ie. when there is a counterpressure which is too high, too low or non-existent, and in that a monitored and preferably laminar airflow is produced and maintained in the application area of the sterilized compressed air.

10. Method according to one of Claims 6 to 9, characterized in that in the sterilizing agent supply system (III), the sterilizing agent is continually set to a desired concentration for use and this concentration is monitored via a maximum/minimum limit-value switch connected to the sterilization mixing and measuring apparatus and in that the sterilizing agent is mixed with sterilized air from the sterilized compressed air system (II) and is used in the application area by means of atomization in the form of a very fine spray.

**Revendications**

1. Appareil pour produire et régir des conditions aseptiques dans une chambre aseptique d'une installation de remplissage ou dans un local aseptique de remplissage en vue d'un remplissage stérile de produits rendus stériles à partir d'un dispositif de remplissage dans des récipients le plus souvent préalablement nettoyés et stérilisés, qui doivent encore être fermés de manière étanche dans ces conditions aseptiques, caractérisé par un système d'amenée de gaz inerte (I) pour former une couverture de gaz inerte sous pression dans la zone ambiante d'un réservoir aseptique ou d'un récipient précédant le remplissage en bout de la conduite d'amenée de produit, une conduite d'amenée (7) de ce système comprenant au moins un filtre stérile pour le gaz inerte (3), un régulateur de pression (4), ainsi qu'un débitmètre pour le gaz inerte (5) avec un commutateur à valeur de seuil max./min. actionnant le dispositif de remplissage,

un système à air comprimé stérile (II) qui comprend, dans une alimentation d'air comprimé centrale, au moins un dispositif de préfiltration pour l'air comprimé (13, 14) et, en série avec celui-ci, une valve de commande (16) et un filtre stérile pour l'air comprimé (17), en aval duquel l'alimentation d'air comprimé centrale se divise en plusieurs conduites de branchement d'alimentation qui aboutissent à diverses zones d'utilisation (a-d) dans la chambre aseptique et le dispositif de remplissage, tandis que dans chaque conduite de branchement d'alimentation sont prévues des valves de commande (18; 19; 23; 25), le cas échéant une valve régulatrice de pression (21) et un débitmètre (20, 22; 24; 26) comportant un commutateur à valeur de seuil max./min. pour assurer la régulation d'un débit de passage préréglé de manière correspondante,

un système d'amenée d'agent de stérilisation (III) comprenant une installation de préparation et de dosage (27-35) pour l'agent de stérilisation, une conduite de raccordement transversale (9, 9a) pour l'air comprimé prévue entre le système à air comprimé stérile (II) et cette installation ainsi qu'une conduite d'amenée d'agent de stérilisation centrale qui part de cette installation, qui contient des valves de commande (36, 38), un régulateur de pression (39) et un appareil de mélange et de mesure de concentration, de contr*ole et d'enregistrement pour l'agent de stérilisation (40, 41, 42) et qui se divise en plusieurs conduites de branchement d'alimentation (37, 47-50) qui sont pourvues chacune de valves de commande (36, 44) et, le cas échéant, de débitmètres (45) avec des commutateurs à valeur de seuil max./min. pour la régulation d'un débit de passage d'agent de stérilisation préréglé de manière correspondante, et

une unité de commutation et de commande centrale commune pour tous les systèmes (I, II et III) afin de combiner les fonctions des systèmes sur base de données de traitement préréglables ou programmables.

2. Appareil suivant la revendication 1, caractérisé en ce que le dispositif de préfiltration pour l'air comprimé comporte, dans le système à air comprimé stérile (II), deux préfiltres (13, 14) disposés l'un derrière l'autre en série, qui sont pourvus chacun d'un dispositif de mesure et d'affichage de la pression différentielle (11, 12), branché de part et d'autre de l'élément filtrant correspondant, entre la conduite d'amenée d'agents de stérilisation centrale et le c*oté de sortie du filtre stérile pour l'air comprimé (17) ou l'endroit de branchement pour les conduites de branchement de l'alimentation d'air comprimé, est raccordée une conduite de rinçage (8) ainsi qu'une conduite de branchement de rinçage (8a) allant de la conduite (8) à l'extrémité située du c*oté de sortie du filtre stérile (3) pour le gaz inerte et dans la conduite de rinçage (8) et la conduite de branchement de rinçage (8a) sont prévues des valves de commande (51, 54) pouvant être actionnées à partir de l'unité centrale de commutation et de commande.

3. Appareil suivant la revendication 1 ou 2, caractérisé en ce que l'installation de préparation et de dosage comporte au moins un récipient d'alimentation de concentré d'agent de stérilisation (35) échangeable et fournit une solution d'agent de stérilisation toujours fraîchement préparée, dans le cas d'un fonctionnement en continu, à la conduite centrale d'amenée d'agent de stérilisation et l'appareil de mélange, de mesure de concentration, de contr*ole et d'enregistrement pour l'agent de stérilisation comprend, en particulier, un appareil de mélange et de mesure de concentration (40) branché dans la conduite d'amenée d'agent de stérilisation, un affichage de concentration (41) raccordé à cet appareil et un enregistreur graphique de la concentration (42) à nouveau connecté à cet affichage.

4. Appareil suivant l'une quelconque des revendications 1 à 3, caractérisé en ce que, dans la conduite d'amenée de produit aboutissant au dispositif de remplissage est installé un capteur de pression qui, dans le cas d'une pression relative insuffisante dans cette conduite d'amenée, déclenche une interruption du remplissage et une valve magnétique est prévue et intervient, en cas de chute de la pression relative en dessous d'une valeur préréglée, pour fournir une pression de gaz stérile d'une valeur correspondante dans la conduite d'amenée de produit afin de maintenir la pression relative.

5. Appareil suivant l'une quelconque des revendications 1 à 4, caractérisé en ce que l'unité de commutation et de commande centrale à la forme d'un montage de sécurité, de contr*ole et d'enregistrement qui est en liaison fonctionnelle avec les éléments du système d'amenée de gaz inerte (I), du système à air comprimé stérile (II) et du système d'amenée d'agent de stérilisation (III), que leur montage de contr*ole, en vue de surveiller un processus de préstérilisation spécifique, comporte, en des endroits de l'installation de remplissage critiques quant à la température, des capteurs de température et des relais temporisés qui maintiennent ouvert, pendant un laps de temps prédéterminé, un dispositif à valve de vapeur chaude de stérilisation ou d'eau, qu'un dispositif de surveillance de valeur limite est, en outre, prévu et maintient la dite valve ouverte encore pendant un laps de temps déterminé après qu'une température souhaitée ait été atteinte jusqu'à ce qu'un des relais temporisés déclenche le processus de préstérilisation, que ce montage comporte, en outre, des dispositifs de mesure et de contr*ole pour la température du produit et la température de remplissage, qui comprennent des contacts a temperature max./min. afin de maintenir des paramètres de température présélectionnés dans les domaines de travail respectifs et que ce montage est pourvu finalement d'un nombre de voyants de contr*ole correspondant aux fonctions de surveillance avec un affichage des fonctions défectueuses.

6. Procédé pour produire et régir des conditions aseptiques dans une installation de remplissage au moyen d'un appareil suivant l'une quelconque des revendications 1 à 5, caractérisé en ce que:

avant chaque début d'une opération de remplissage ou de la reprise de cette opération après une interruption, la chambre ou le local aseptique et tous les éléments de l'installation nécessaires pour le remplissage sont préstérilisés pendant une période qui peut être sélectionnée par une vaporisation d'agent de stérilisation par l'intermédiaire du système d'amenée d'agent de stérilisation (III),

la conduite d'amenée de produit et le dispositif de remplissage sont, en outre, préstérilisés par le passage limité dans le temps de gaz chaud, de vapeur ou d'un autre liquide de stérilisation d'une efficacité correspondante,

pendant l'opération de remplissage, les conditions aseptiques maintenues par les dits systèmes (I à III) sont périodiquement surveillées, réglées et enregistrées par le système de sécurité, de contr*ole et d'enregistrement d'après des paramètres préréglés, et

en cas d'absence d'un paramètre essentiel, l'opération de remplissage est immédiatement interrompue.

7. Procédé suivant la revendication 6, caractérisé en ce que, avant le début d'une opération de remplissage, les paramètres correspondants pour une préstérilisation des produits, des récipients de remplissage et de la chambre aseptique ainsi que des éléments de conduites d'amenée et de valves de commande, ainsi qu'en outre les conditions de température et de pression et le degré de stérilisation de même que sa durée, sont contr*olés de manière continue par le montage de contr*ole, de sécurité et d'enregistrement et ce système ne permet le démarrage de l'opération de remplissage que lorsque tous les paramètres sont respectés de la manière préréglée.

8. Procédé suivant la revendication 6 ou 7, caractérise en ce que l'alimentation du dispositif de remplissage en produit est maintenue sous la pression de contr*ole continue d'un gaz comme de l'azote, du dioxyde de carbone ou de l'air stérile et, lors d'un dépassement par excès ou par défaut d'un paramètre de pression préréglé, le dispositif de remplissage est coupé, qu'en outre, la température du produit, la température de remplissage, la température de la préstérilisation et le nettoyage CIP sont surveillés au moyen de capteurs de température et que, dans le cas d'un actionnement correspondant de commutateurs à valeur de seuil max./min. de ces capteurs, le processus en cours est interrompu à la suite d'un dépassement par excès ou par défaut d'une valeur de seuil.

9. Procédé suivant l'une quelconque des revendications 6 à 8, caractérisé en ce que l'air comprimé filtré par l'intermédiaire de filtres stériles alimentant le système à air comprimé stérile (II), est un air comprimé sec et propre, que le remplissage est interrompu lorsqu'au niveau des préfiltres d'air comprimé surveillés par un ou plusieurs instruments de mesure de pression différentielle apparaît une perturbation de fonctionnement, c'est-à-dire lorsqu'une contre-pression trop élevée, trop faible ou nulle est présente et que dans le domaine d'utilisation de l'air comprimé stérile, un écoulement d'air, de préférence laminaire contr*olé est produit et maintenu.

10. Procédé suivant l'une quelconque des revendications 6 à 9, caractérisé en ce que, dans le système d'amenée d'agent de stérilisation (III), l'agent de stérilisation est continuellement réglé sur une concentration d'usage souhaitée et cette concentration est contr*olée par l'intermédiaire d'un circuit à valeur de seuil max./min. raccordé à l'appareil de mélange et de mesure pour l'agent de stérilisation et l'agent de stérilisation est mélangé avec de l'air stérile provenant du système à air comprimé stérile (II) et est introduit à l'état finement divisé par vaporisation dans le domaine d'utilisation.

FIG.1

0 180 540

FIG. 2

3